# EUROPEAN PATENT APPLICATION

(11) **EP 4 632 850 A1**
(43) Date of publication of application: **15.10.2025**
(21) Application number: 23900650.5
(22) Date of filing: 05.12.2023
(51) Int. Cl.: H01M 8/0247, H01M 8/0276, H01M 8/10

(54) **LAYERED STRUCTURE FOR FUEL-CELL SEPARATOR**

(30) Priority: 07.12.2022 JP 2022195627
(71) Applicant: NOK Corporation, Tokyo 105-8585 (JP)
(72) Inventor: SANO, Yohei, Tsujido-shinmachi, Fujisawa-shi, Kanagawa 251- 0042 (JP); HYODO, Daisuke, Tsujido-shinmachi, Fujisawa-shi, Kanagawa 251- 0042 (JP)
(74) Representative: TBK
(86) International application number: PCT/JP2023/043446
(87) International publication number: WO 2024/122535

(57) **Abstract**

There is provided a stacked structure body of a fuel cell separator capable of securing a stable reaction force at an opposing receiving part and effectively restraining over-compression of a bead part even when a misalignment of stacking occurs in the stacked separators.

The stacked structure body of a fuel cell separator includes a first set 11 having one separator 12 and a second set 21 having another separator 22, one separator 12 and another separator 22 have bead parts 14 and 24, and receiving parts 16 and 26 to receive an over-compression load of each of the bead parts 14 and 24, respectively, one separator 12 and another separator 22 are oppositely arranged such that the surfaces on the protruding sides of the bead parts 14 and 24 and the receiving parts 16 and 26 face each other, the linearly extending direction of the receiving part 26 of one separator 12 and the linearly extending direction of the receiving part 26 of another separator 22 are configured to be non-parallel, and the opposing receiving parts 16 and 26 are configured to partially overlap each other.

## Description

### TECHNICAL FIELD

The present invention relates to a stacked structure body of a fuel cell separator. More particularly, the present invention relates to a stacked structure body of a fuel cell separator in which two or more fuel cell separators are stacked.

### BACKGROUND ART

In recent years, fuel cells (i.e., fuel cell stacks) have been developed for fuel cell vehicles and the like. The fuel cell stack includes a stacked structure body in which a plurality of unit cells are stacked, and a housing body for housing the stacked structure body. The unit cell includes an electrolyte membrane, an electrode, a gas flow path, a fuel cell separator, and the like as main components, and generates electric power by supplying a fuel gas such as hydrogen from an anode side and an oxidizing gas such as air from a cathode side.

One of the sealing structures of the fuel cell is a configuration in which a seal is secured by a reaction force of a bead part (for example, refer to FIGs. 2 and 3 of Patent Document 1). For example, Patent Document 1 discloses a fuel cell including a membrane electrode gas diffusion layer assembly in which a membrane electrode assembly is sandwiched between a pair of gas diffusion layers, a frame-shaped insulating member in contact with an outer peripheral part of the membrane electrode gas diffusion layer assembly, and first and second separators that sandwich the membrane electrode gas diffusion layer assembly and the insulating member.

By the way, when the separators having the above-described sealing structure are compressed in a stacked state, the compression states of the bead parts become uneven, and some of the bead parts are over-compressed and damaged, which may impair the sealing properties of the fuel cell.

As a measure for preventing such over-compression of the bead part, a technique has been proposed in which a receiving part for preventing over-compression of the bead part is provided around the bead part of the separator (for example, refer to Patent Document 2). For example, Patent Document 2 discloses a fuel cell stack assembly including at least one bipolar plate including at least one raised bead part and at least one raised limiter. In the fuel cell stack assembly described in Patent Document 2, it is said that the above-described raised limiter functions as a receiving part for preventing over-compression of the bead part, and by adding such a limiter, excessive compression can be prevented, and leakage in the fuel cell and failure of the fuel cell stack can be suppressed.

### CITATION LIST

### Patent Literature

Patent Document 1: JP-A-2020-198200
Patent Document 2: U.S. Patent Application Publication No. 2018/0123141

### SUMMARY OF THE INVENTION

### Technical Problem

However, even if a receiving part for preventing over-compression of a bead part is provided around the bead part, it is difficult to restrain over-compression of the bead part if a misalignment of stacking (for example, misalignment between the stacked separators) occurs when stacking separators.

For example, as a receiving part for preventing over-compression of the bead part, a protruding part provided around the bead part is exemplified. Such a receiving part receives over-compression of the bead part on the top surface of the protruding receiving part. For this reason, for example, when a top surface of the receiving part has an arc shape, the center side of the top surface becomes a high reaction force portion, but when a misalignment of stacking occurs when stacking separators, the high reaction force portions of the opposing receiving parts (that is, the center side of the top surface) do not touch each other, and the reaction force of the receiving part decreases. Further, when the top surface of the receiving part is flat, both end sides of the top surface of the flat shape becomes a high reaction force portion, and if a misalignment of stacking occurs when stacking separators, the high reaction force portions of the opposing receiving parts do not touch each other as in the case described above, so that the reaction force of the receiving part decreases. It is possible to suppress a decrease in the reaction force of the receiving part by stacking separators so as not to cause a misalignment of stacking, but this requires higher accuracy when stacking the separators. For example, the assembly accuracy that is greater than the required assembly accuracy may be required from the viewpoint of the fuel cell performance.

In order to solve such problems, there has been a strong need to develop a stacked structure body of a fuel cell separator having excellent robustness, which can maintain a favorable contact state between opposing receiving parts and effectively prevent over-compression of a bead part due to contact between the receiving parts even when a misalignment of stacking occurs in the separator.

In view of the above problems, the present disclosure provides a stacked structure body of a fuel cell separator having excellent robustness in which performance degradation due to external influences such as a misalignment of stacking of a separator is effectively suppressed.

### Solution to Problem

In order to solve the above problems, the present disclosure provides the following stacked structure body of a fuel cell separator.
[1] A stacked structure body of a fuel cell separator in which two or more fuel cell separators constituting a unit cell of a fuel cell stack are stacked, comprising:
   a first set having one separator and a second set having another separator, wherein
   said one separator and said another separator have a bead part protruding toward one surface side, and a receiving part protruding linearly in the same direction as the bead part to receive an over-compression load of the bead part, respectively,
   said one separator and said another separator are oppositely arranged such that the surfaces on the protruding sides of the bead part and the receiving part face each other,
   a direction in which the receiving part of said one separator extends linearly and a direction in which the receiving part of said another separator extends linearly are configured to be non-parallel, and the opposing receiving parts are configured to partially overlap each other.
[2] The stacked structure body of a fuel cell separator according to [1], comprising:
   the first set comprising a first separator and a second separator which are stacked in the thickness direction, and
   the second set comprising a third separator and a fourth separator which are stacked in the thickness direction, wherein,
   the second separator includes: a second bead part protruding toward a second outer surface side opposite to a first contact surface on which the first separator and the second separator which are stacked are brought into contact with each other; and a second receiving part protruding linearly in the same direction as the second bead part to receive an over-compression load of the second bead part,
   the third separator includes: a third bead part protruding toward a third outer surface side opposite to a second contact surface on which the third separator and the fourth separator which are stacked are brought into contact with each other; and a third receiving part protruding linearly in the same direction as the third bead part to receive an over-compression load of the third bead part,
   the first set and the second set are stacked such that the second outer surface side of the second separator constituting the first set and the third outer surface side of the third separator constituting the second set face each other,
   a direction in which the second receiving part of the second separator extends linearly and a direction in which the third receiving part of the third separator extends linearly are configured to be non-parallel, and the second receiving part and the third receiving part are arranged oppositely so as to partially overlap each other.
[3] The stacked structure body of a fuel cell separator according to [2], wherein the first separator has a first bead part protruding toward a first outer surface side opposite to the first contact surface, and a first receiving part protruding linearly in the same direction as the first bead part to receive an over-compression load of the first bead part, and
   a direction in which the first receiving part of the first separator extends linearly and a direction in which the second receiving part of the second separator extends linearly are configured to be parallel to each other.
[4] The stacked structure body of a fuel cell separator according to [3], wherein the first receiving part and the second receiving part are formed in mirror-image symmetry with respect to the first contact surface.
[5] The stacked structure body of a fuel cell separator according to [2], wherein the fourth separator has a fourth bead part protruding toward a fourth outer surface side opposite to the second contact surface, and a fourth receiving part protruding linearly in the same direction as the fourth bead part to receive an over-compression load of the fourth bead part, and
   a direction in which the third receiving part of the third separator extends linearly and a direction in which the fourth receiving part of the fourth separator extends linearly are configured to be parallel to each other.
[6] The stacked structure body of a fuel cell separator according to [5], wherein the third receiving part and the fourth receiving part are formed in mirror-image symmetry with respect to the second contact surface.
[7] The stacked structure body of a fuel cell separator according to [2], wherein the first separator has a first bead part protruding toward a first outer surface side opposite to the first contact surface, and a first receiving part protruding linearly in the same direction as the first bead part to receive an over-compression load of the first bead part, and
   a direction in which the first receiving part of the first separator extends linearly and a direction in which the second receiving part of the second separator extends linearly are configured to be non-parallel.
[8] The stacked structure body of a fuel cell separator according to [7], wherein a direction in which the first receiving part of the first separator extends linearly and a direction in which the third receiving part of the third separator extends linearly are configured to be parallel to each other.
[9] The stacked structure body of a fuel cell separator according to [2], wherein the fourth separator has a fourth bead part protruding toward a fourth outer surface side opposite to the second contact surface, and a fourth receiving part protruding linearly in the same direction as the fourth bead part to receive an over-compression load of the fourth bead part, and
   a direction in which the third receiving part of the third separator extends linearly and a direction in which the fourth receiving part of the fourth separator extends linearly are configured to be non-parallel.
[10] The stacked structure body of a fuel cell separator according to [9], wherein a direction in which the second receiving part of the second separator extends linearly and a direction in which the fourth receiving part of the fourth separator extends linearly are configured to be parallel to each other.
[11] The stacked structure body of a fuel cell separator according to any one of [1] to [10], wherein two linearly extending directions of the receiving parts facing each other are configured to form an angle of 5 to 90°.
[12] The stacked structure body of a fuel cell separator according to any one of [1] to [10], wherein in said one separator of the first set and/or said another separator of the second set, a protruding height of the receiving part is smaller than a protruding height of the bead part.

### Advantageous Effects of Invention

The stacked structure body of a fuel cell separator described above can prevent over-compression of the bead part. In particular, even if the stacked separators are misaligned, the top parts of the opposing receiving parts overlap each other, so that a decrease in the reaction force of the receiving parts can be suppressed. As a result, a stable reaction force can be secured in the opposing receiving part, over-compression of the bead part can be suppressed, and deterioration of the bead part can be effectively suppressed. As described above, the stacked structure body of a fuel cell separator effectively suppresses performance degradation due to external influences such as misalignment of stacking of the separator, and is excellent in robustness.

### BRIEF DESCRIPTION OF DRAWINGS

[FIG. 1] This is a plan view schematically showing a first set in one embodiment of the stacked structure body of a fuel cell separator.
[FIG. 2] This is a cross-sectional perspective view showing the configuration of AA cross-section of FIG. 1.
[FIG. 3] This is a plan view schematically showing a second set in one embodiment of the stacked structure body of a fuel cell separator.
[FIG. 4] This is a cross-sectional perspective view showing the configuration of BB cross-section of FIG. 3.
[FIG. 5] This is a partial cross-sectional view schematically showing a part of a cross section of a fuel cell stack including a unit cell having one embodiment of the fuel cell separator taken along the stacked direction of the unit cell.
[FIG. 6] This is a perspective view schematically showing one embodiment of the stacked structure body of a fuel cell separator.
[FIG. 7] This is a cross-sectional perspective view showing the configuration of a first set in another embodiment of the stacked structure body of a fuel cell separator.
[FIG. 8] This is a cross-sectional perspective view showing the configuration of a second set in another embodiment of the stacked structure body of a fuel cell separator.
[FIG. 9] This is a perspective view schematically showing another embodiment of the stacked structure body of a fuel cell separator.
[FIG. 10] This is an enlarged perspective view for explaining an example of a receiving part of the separator.
[FIG. 11] This is a perspective view for explaining a generation state of reaction force received by the receiving part shown in FIG. 10.
[FIG. 12] This is an enlarged perspective view for explaining another example of the receiving part of the separator.
[FIG. 13] This is a perspective view for explaining a generation state of reaction force received by the receiving part shown in FIG. 12.
[FIG. 14] This is an enlarged perspective view for explaining still another example of the receiving part of the separator.
[FIG. 15] This is an enlarged perspective view for explaining still another example of the receiving part of the separator.
[FIG. 16] This is an enlarged perspective view for explaining still another example of the receiving part of the separator.
[FIG. 17] This is an enlarged perspective view for explaining still another example of the receiving part of the separator.
[FIG. 18] This is a perspective view schematically showing the configuration of the fuel cell stack.

### DESCRIPTION OF EMBODIMENTS

Embodiments of the present invention will be described below referring to the drawings. It should be understood that the present invention is not limited to the following embodiments, and modifications, improvements, and the like in the design can be made as appropriate based on ordinary knowledge of a person skilled in the art without departing from the spirit of the present invention.

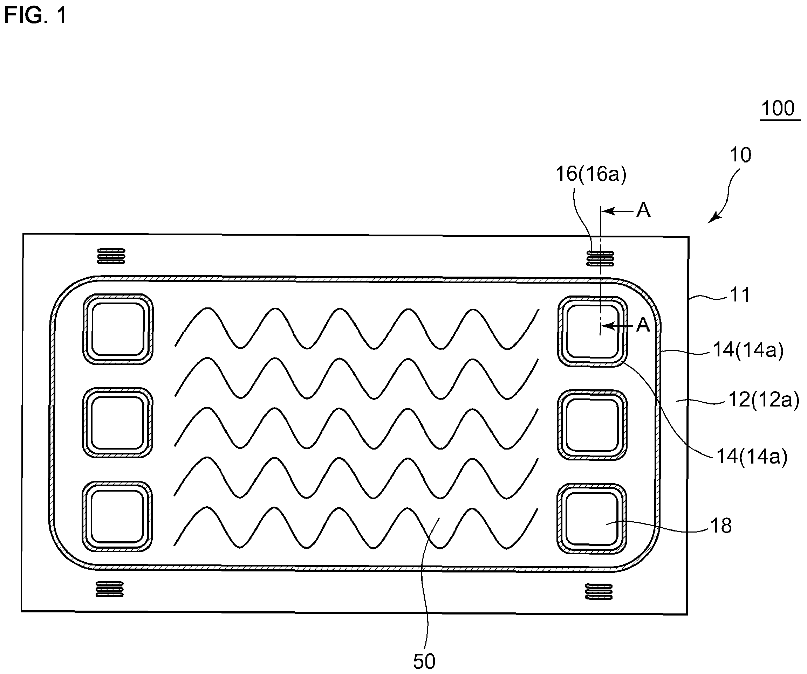

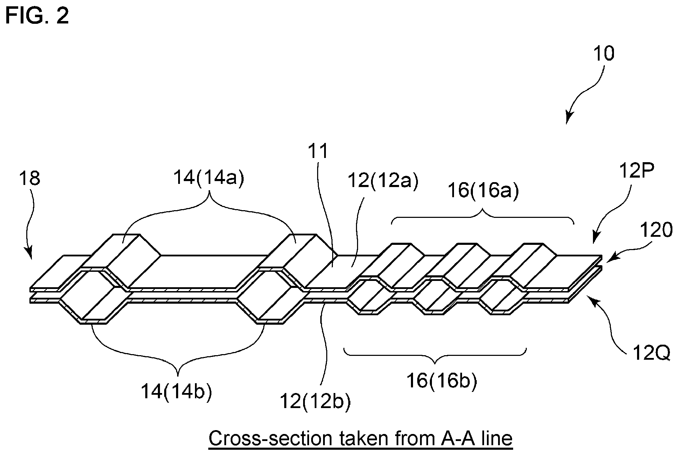

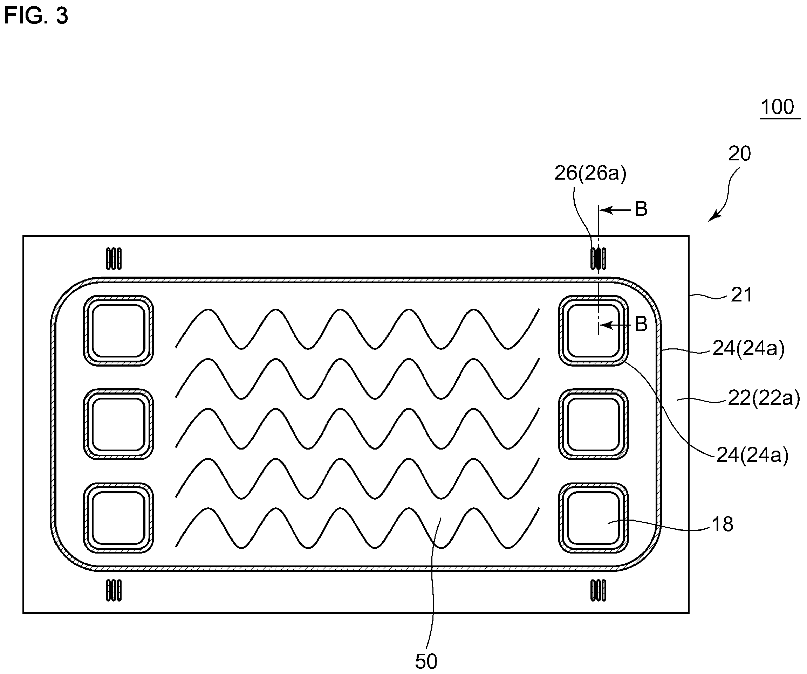

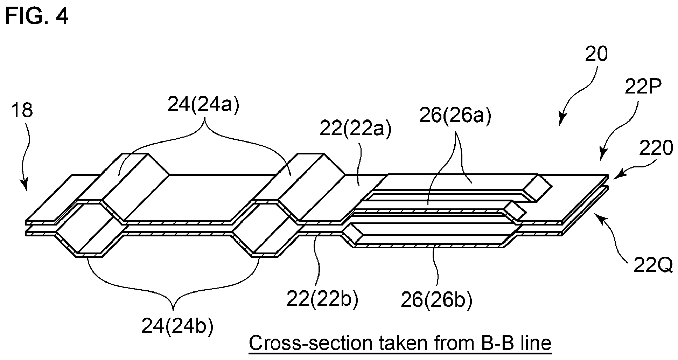

One embodiment of the present stacked structure body of a fuel cell separator is a stacked structure body 100 of a fuel cell separator comprising a first set 11 as shown in FIGs. 1 and 2 and a second set 21 as shown in FIGs. 3 and 4. The stacked structure body 100 of a fuel cell separator comprises at least two such sets (a first set 11 and a second set 21), where the first set 11 has one separator 12 (e.g., a second separator 12b) and the second set 21 has another separator 22 (e.g., a third separator 22a). One separator 12 and another separator 22 have bead parts 14 and 24 protruding toward one surface side, and receiving parts 16 and 26 protruding linearly in the same direction as the bead parts 14 and 24 to receive an over-compression load of the bead parts 14 and 24, respectively.

In the stacked structure body 100 of a fuel cell separator, one separator 12 and another separator 22 are oppositely arranged such that the surfaces on the protruding sides of the bead parts 14 and 24 and the receiving parts 16 and 26 face from each other. A direction in which the receiving part 16 of one separator 12 extends linearly and a direction in which the receiving part 26 of another separator 22 extends linearly are configured to be non-parallel, and the opposing receiving parts 16 and 26 are configured to partially overlap each other.

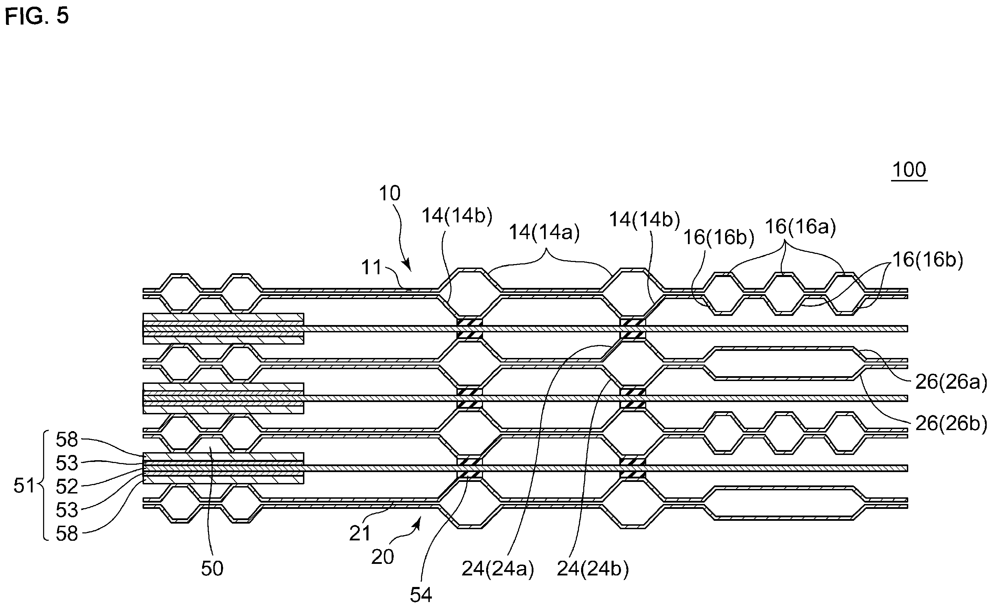

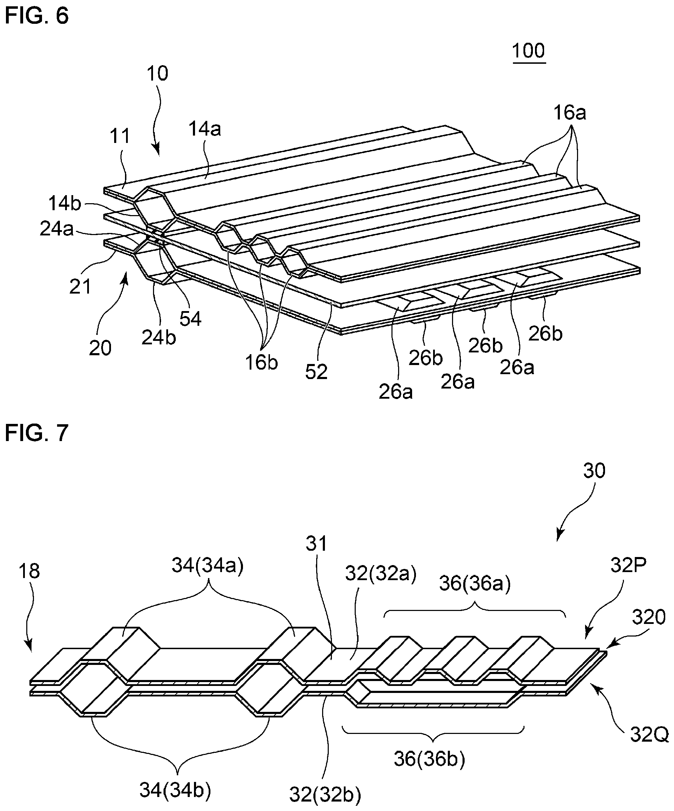

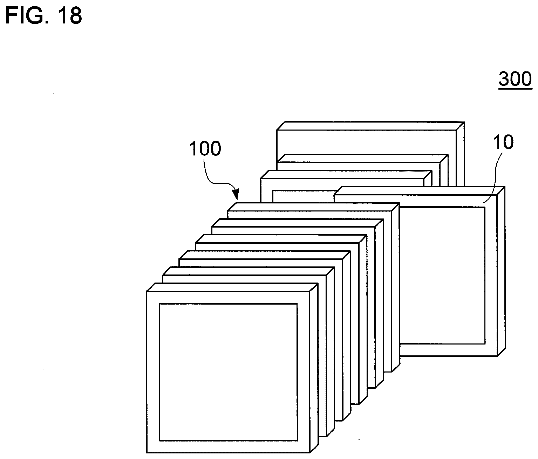

More specifically, as shown in FIGs. 5 and 6, the first set 11 and the second set 21 are stacked so that the second outer surface 12Q side of the second separator 12b constituting the first set 11 faces the third outer surface 22P side of the third separator 22a constituting the second set 21 in the stacked structure body 100 of the fuel cell separator. The first set 11 and the second set 21 are metal plate-shaped members constituting unit cells 10 and 20 in the fuel cell stack. After the plurality of unit cells 10 and 20 are stacked, the unit cells 10 and 20 are fastened together by applying an external force in the stacked direction so that the unit cells 10 and 20 do not shift in the fuel cell stack. For example, the stacked structure 100 of the fuel cell separator can be used as a fuel cell stack 300 including the stacked structure 100 of the fuel cell separator in which the plurality of unit cells 10 are stacked as shown in FIG. 18. FIG. 18 is a perspective view schematically showing a configuration of the fuel cell stack 300.

Here, FIG. 1 is a plan view schematically showing a first set of one embodiment of the stacked structure body of the fuel cell separator, and FIG. 2 is a cross-sectional perspective view showing a configuration of AA cross-section of FIG. 1. FIG. 3 is a plan view schematically showing a second set of one embodiment of the stacked structure body of the fuel cell separator. FIG. 4 is a cross-sectional perspective view showing a configuration of BB cross-section of FIG. 3. FIG. 5 is a partial cross-sectional view schematically showing a part of a cross section of a fuel cell stack including a unit cell having one embodiment of the fuel cell separator taken along stacked direction of the unit cell. FIG. 6 is a perspective view schematically showing one embodiment of the stacked structure body of the fuel cell separator.

The unit cells 10 and 20 are, for example, made of metal and constitute a solid polymer fuel cell or the like. The unit cells 10 and 20 include, for example, a membrane electrode assembly 51 sandwiched between the first set 11 and the second set 21, and a gas flow path 50 provided between the membrane electrode assembly 51 and the first set 11 and the second set 21, in addition to the pair of the first set 11 and the second set 21 constituting the stacked structure body 100 of the fuel cell separator. The membrane electrode assembly 51 includes, for example, an electrolyte membrane 52 made of a solid polymer membrane or the like, a pair of electrolyte catalyst layers 53 sandwiching the electrolyte membrane 52, and a gas diffusion layer 58 disposed so as to cover the electrolyte catalyst layer 53. The unit cells 10 and 20 as a fuel cell are, for example, members that generate electric power by a chemical reaction between hydrogen (fuel gas) supplied from the anode side and oxygen (oxidant gas) supplied from the cathode side.

The first set 11 includes, for example, two separators 12 stacked in the thickness direction. Hereinafter, one separator 12 constituting the first set 11 is referred to as a first separator 12a, and the other separator 12 is referred to as a second separator 12b. A surface on which stacked first separator 12a and second separator 12b come into contact is referred to as a first contact surface 12O. A surface of the first separator 12a opposite to the first contact surface 12O is referred to as a first outer surface 12P, and a surface of the second separator 12b opposite to the first contact surface 12O is referred to as a second outer surface 12Q.

Similarly, the second set 21 includes, for example, two separators 22 stacked in the thickness direction. Hereinafter, one separator 22 constituting the second set 21 is referred to as a third separator 22a, and the other separator 22 is referred to as a fourth separator 22b. A surface on which stacked third separator 22a and fourth separator 22b come into contact is referred to as a second contact surface 22O. A surface of the third separator 22a opposite to the second contact surface 22O is referred to as a third outer surface 22P, and a surface of the fourth separator 22b opposite to the second contact surface 22O is referred to as a fourth outer surface 22Q.

The first separator 12a includes a first bead part 14a protruding toward the first outer surface 12P side, and a first receiving part 16a protruding linearly in the same direction as the first bead part 14a to receive an over-compression load on the first bead part 14a.

The second separator 12b includes a second bead part 14b protruding toward the second outer surface 12Q side, and a second receiving part 16b protruding linearly in the same direction as the second bead part 14b to receive an over-compression load on the second bead part 14b.

The third separator 22a includes a third bead part 24a protruding toward the third outer surface 22P side, and a third receiving part 26a protruding linearly in the same direction as the third bead part 24a to receive an over-compression load on the third bead part 24a.

The fourth separator 22b has a fourth bead part 24b protruding toward the fourth outer surface 22Q, and a fourth receiving part 26b protruding linearly in the same direction as the fourth bead part 24b to receive an over-compression load on the fourth bead part 24b.

Hereinafter, the first bead part 14a, the second bead part 14b, the third bead part 24a, and the fourth bead part 24b may be collectively referred to simply as "bead parts 14 and 24". Similarly, the first receiving part 16a, the second receiving part 16b, the third receiving part 26a, and the fourth receiving part 26b may be collectively referred to simply as "receiving parts 16 and 26".

The bead parts 14 and 24 are convex parts where the first set 11 and the second set 21, which are adjacent unit cells 10 and 20, are in contact with each other, and the shape thereof on the plane of the stacked structure body 100 of the fuel cell separator is not particularly limited. For example, the bead parts may have an annular shape on the plane of the stacked structure body 100 of the fuel cell separator (see, for example, FIGs. 1 and 3), but may not have an annular shape. For example, the shape of the bead parts 14 and 24 on the plane of the stacked structure body 100 of the fuel cell separator may be a mirror image shape of the adjacent unit cells 10 and 20 (that is, the first set 11 and the second set 21). For example, when the bead part 14 of the first set 11 and the bead part 24 of the second set 21 are mirror image shapes, both bead parts 14 and 24 come into contact with each other in the stacked structure body 100 of the fuel cell separator. A seal material 54 arranged so as to be in contact with the adjacent unit cells 10 and 20 may be provided at the apex of the bead parts 14 and 24.

In the present stacked structure body 100 of the fuel cell separator, the receiving parts 16 and 26 for receiving the over-compression load of the bead parts 14 and 24 have a particularly main configuration. That is, in the present stacked structure body 100 of the fuel cell separator, a direction in which the second receiving part 16b of the second separator 12b extends linearly and a direction in which the third receiving part 26a of the third separator 22a extends linearly are configured to be non-parallel, and the second receiving part 16b and the third receiving part 26a are arranged oppositely so as to partially overlap each other. With this configuration, it is possible to extremely effectively prevent over-compression of the bead parts 14 and 24. That is, even when the first set 11 and the second set 21 are misaligned, the top parts of the opposing second receiving part 16b and third receiving part 26a overlap each other, so that it is possible to satisfactorily maintain the contact between the high reaction force portions, and it is possible to suppress a decrease in the reaction force of the second receiving part 16b and the third receiving part 26a. As a result, a stable reaction force can be secured at the second receiving part 16b and the third receiving part 26a, and over-compression of the bead parts 14 and 24 can be restrained, and degradation of the bead parts 14 and 24 can be effectively suppressed. Therefore, the present stacked structure body 100 of the fuel cell separator effectively suppresses performance degradation due to external influences such as misalignment of stacking of the separator, and is excellent in robustness.

The second receiving part 16b and the third receiving part 26a are linear protruding parts for receiving the over-compression loads of the bead parts 14 and 24, and as described above, the shape on the plane of the stacked structure body 100 of the fuel cell separator is not particularly limited as long as the linearly extending directions of the second receiving part and the third receiving part are non-parallel. For example, it is preferable that the second receiving part 16b and the third receiving part 26a are formed in a straight line having both ends on a plane of the stacked structure body 100 of the fuel cell separator, and are disposed so as to have a non-parallel positional relation so as to partially intersect with each other. Further, the cross-sectional shape orthogonal to the linearly extending directions of the second receiving part 16b and the third receiving part 26a is not particularly limited. Hereinafter, the cross-sectional shape orthogonal to the linearly extending directions of the receiving parts 16 and 26 may be simply referred to as a "cross-sectional shape" of the receiving parts 16 and 26. The specific cross-sectional shape and the shape of the top surface of each of the receiving parts 16 and 26 will be described later.

In the present stacked structure body 100 of the fuel cell separator, the receiving parts 16 and 26 protruding toward the opposing surfaces (the second outer surface 12Q and the third outer surface 22P) of the stacked first set 11 and second set 21 may be disposed so as to have a non-parallel positional relation, and the other receiving parts 16 and 26 are not particularly limited. However, the present stacked structure body 100 of the fuel cell separator may be provided with other sets (not shown) having further separators on the first outer surface 12P side of the first set 11 and the fourth outer surface 22Q side of the second set 21, and for these other sets, it is preferable that the respective opposing receiving parts 16 and 26 are configured to have a non-parallel positional relation.

In the first set 11 shown in FIGs. 2 and 6, a direction in which the first receiving part 16a of the first separator 12a extends linearly and a direction in which the second receiving part 16b of the second separator 12b extends linearly are configured to be parallel to each other. For example, in the first set 11 configured as described above, the first receiving part 16a and the second receiving part 16b may be formed in mirror-image symmetry with respect to the first contact surface 12O.

In addition, in the second set 21 shown in FIGs. 4 and 6, a direction in which the third receiving part 26a of the third separator 22a extends linearly and a direction in which the fourth receiving part 26b of the fourth separator 22b extends linearly are configured to be parallel to each other. For example, in the second set 21 configured as described above, the third receiving part 26a and the fourth receiving part 26b may be formed in mirror-image symmetry with respect to the second contact surface 22O.

The stacked structure body 100 of the fuel cell separator including the first set 11 and the second set 21 as shown in FIG. 6 has extremely excellent stability at the time of stacking of the first set 11 and the second set 21, and can realize stable sealing property by the bead parts 14 and 24.

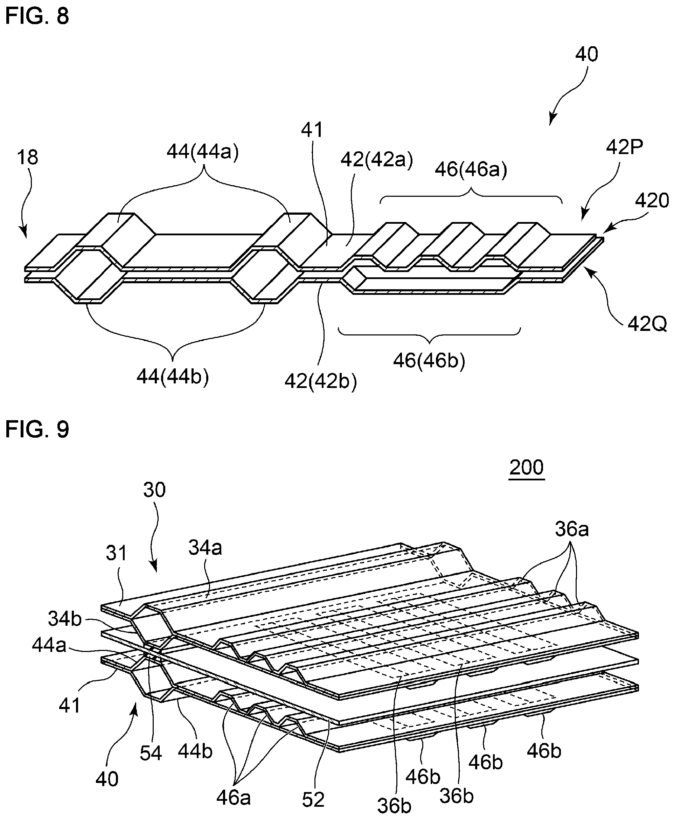

The present stacked structure body of the fuel cell separator may be a stacked structure body 200 of the fuel cell separator configured as shown in FIGs. 7 to 9. FIG. 7 is a cross-sectional perspective view showing a configuration of a first set in another embodiment of the stacked structure body of the fuel cell separator. FIG. 8 is a cross-sectional perspective view showing a configuration of a second set in another embodiment of the stacked structure body of the fuel cell separator. FIG. 9 is a perspective view schematically showing another embodiment of the stacked structure body of the fuel cell separator.

The stacked structure body 200 of the fuel cell separator shown in FIG. 9 includes a first set 31 as shown in FIG. 7 and a second set 41 as shown in FIG. 8. Similar to the stacked structure body 100 of the fuel cell separator (see, e.g., FIG. 6) described above, the first set 31 has a first separator 32a and a second separator 32b which are stacked in the thickness direction. The second set 41 has a third separator 42a and a fourth separator 42b which are stacked in the thickness direction.

The first separator 32a has a first bead part 34a protruding toward a first outer surface 32P side, and a first receiving part 36a protruding linearly in the same direction as the first bead part 34a. The second separator 32b has a second bead part 34b protruding toward a second outer surface 32Q side, and a second receiving part 36b protruding linearly in the same direction as the second bead part 34b.

The third separator 42a has a third bead part 44a protruding toward a third outer surface 42P side, and a third receiving part 46a protruding linearly in the same direction as the third bead part 44a. The fourth separator 42b has a fourth bead part 44b protruding toward a fourth outer surface 42Q side, and a fourth receiving part 46b protruding linearly in the same direction as the fourth bead part 44b.

In the present stacked structure body 200 of the fuel cell separator, a direction in which the second receiving part 36b of the second separator 32b extends linearly and a direction in which the third receiving part 46a of the third separator 42a extends linearly are configured to be non-parallel, and the second receiving part 36b and the third receiving part 46a are arranged oppositely so as to partially overlap each other. However, the present stacked structure body 200 of the fuel cell separator differs from the stacked structure body 100 of the fuel cell separator shown in FIG. 6 in the shape of the first receiving part 36a of the first separator 32a constituting the first set 31 and the fourth receiving part 46b of the fourth separator 42b constituting the second set 41.

Specifically, in the first set 31 shown in FIGs. 7 and 9, a direction in which the first receiving part 36a of the first separator 32a extends linearly and a direction in which the second receiving part 36b of the second separator 32b extends linearly are configured to be non-parallel.

Further, in the second set 41 shown in FIGs. 8 and 9, a direction in which the third receiving part 46a of the third separator 42a extends linearly and a direction in which the fourth receiving part 46b of the fourth separator 42b extends linearly are configured to be non-parallel.

On the other hand, in the present stacked structure body 200 of the fuel cell separator, a direction in which the first receiving part 36a of the first separator 32a constituting the first set 31 extends linearly and a direction in which the third receiving part 46a of the third separator 42a constituting the second set 41 extends linearly are configured to be parallel to each other.

In the present stacked structure body 200 of the fuel cell separator, a direction in which the second receiving part 36b of the second separator 32b constituting the first set 31 extends linearly and a direction in which the fourth receiving part 46b of the fourth separator 42b constituting the second set 41 extends linearly are configured to be parallel to each other.

In the present stacked structure body 200 of the fuel cell separator, the first set 31 and the second set 41 have substantially the same shape. In other words, in the present stacked structure body 200 of the fuel cell separator, the first set 31 and the second set 41 that become the unit cells 20 and 40 have a pair of the separators 32 and 42 formed in non-mirror-image symmetry with respect to the respective contact surfaces (the first contact surface 32O, the second contact surface 42O). With this configuration, by stacking substantially one type of separator, the linearly extending directions of the opposing receiving parts 36 and 46 can be made non-parallel, and the performance degradation due to the misalignment of stacking can be effectively suppressed.

Needless to say, the shapes of the first receiving part 36a of the first separator 32a and the fourth receiving part 46b of the fourth separator 42b and the linearly extending direction are not limited to those described above. As described above, it can be appropriately changed according to various situations such as when another set having another separator is further disposed.

Referring back to FIGs. 1 to 6, the stacked structure body 100 of the fuel cell separator will be described.

The separators 12 and 22 constituting the first set 11 and the second set 21 are metallic plate shape members. The material is not particularly limited as long as it is a metal, and the same material as that of a conventionally known metal separator can be employed. Examples of the material of the separators 12 and 22 include stainless steel and titanium.

The first separator 12a and the second separator 12b constituting the first set 11 may be bond to each other, or may be simply stacked one on top of the other. Similarly, the third separator 22a and the fourth separator 22b constituting the second set 21 may be bond to each other, or may be simply stacked one on top of the other.

The first set 11 and the second set 21 are provided with communication holes 18 that communicate with each other in the stacked direction to supply and discharge the oxidant gas and the fuel gas. For example, the communication hole 18 is preferably provided at an edge portion of one of the first set 11 and the second set 21.

The bead parts 14 and 24 protrude toward the electrolyte membrane 52, for example, and are formed over the entire circumference of the outer peripheral edge of the stacked structure body 100 of the fuel cell separator so as to be in an endless condition. In the case where the communication hole 18 is provided, the bead parts may be formed so as to surround the communication hole 18.

The receiving parts 16 and 26 are linear protrusions protruding in the same direction as the bead parts 14 and 24 of the separators 12 and 22, respectively, and for example, the receiving parts 16 and 26 are preferably provided around the respective bead parts 14 and 24. For example, the receiving parts 16 and 26 are preferably provided in a predetermined range in the vicinity of the bead lines of the bead parts 14 and 24 of the separators 12 and 22, respectively. For example, the practical distance from the bases of the bead lines of the bead parts 14 and 24 to the bases of the adjacent receiving parts 16 and 26 is, for example, equal to or greater than 1mm. The distance between the bead lines of the bead parts 14 and 24 and the receiving parts 16 and 26 is the mutual distance between the bases of the respective protrusions. The receiving parts 16 and 26 are preferably provided in a range of 1 to 30mm from the bead parts 14 and 24 of the separators 12 and 22, respectively. With this configuration, when an over-compression load is generated in the adjacent bead parts 14 and 24, the over-compression load can be effectively received.

The protruding heights of the receiving parts 16 and 26 are preferably smaller than the protruding heights of the bead parts 14 and 24 of the respective separators 12 and 22. For example, it is preferable that a protruding height of the second receiving part 16b toward the second outer surface 12Q side is smaller than a protruding height of the second bead part 14b toward the second outer surface 12Q side, and a protruding height of the third receiving part 26a toward the third outer surface 22P side is smaller than a protruding height of the third bead part 24a toward the third outer surface 22P side. A protruding height of the first receiving part 16a toward the first outer surface 12P side may be smaller than a protruding height of the first bead part 14a toward the first outer surface 12P side. Further, a protruding height of the fourth receiving part 26b toward the fourth outer surface 22Q side may be smaller than a protruding height of the fourth bead part 24b toward the fourth outer surface 22Q side.

The receiving parts 16 and 26 may be one linear protrusion or a plurality of linear protrusions with respect to the bead lines of the bead parts 14 and 24. For example, in the present stacked structure body 100 of the fuel cell separator, three linear receiving parts 16 and 26 are provided with respect to the bead lines of the bead parts 14 and 24, respectively. The receiving parts 16 and 26 may be provided inside the bead lines of the bead parts 14 and 24, or may be provided outside the bead lines of the bead parts 14 and 24. Further, the receiving parts 16 and 26 may be provided on both the inside and the outside of the bead lines of the bead parts 14 and 24.

In the stacked structure body 100 of the fuel cell separator, the opposing receiving parts 16 and 26 being configured to be non-parallel to each other means that the direction in which one receiving part 16 extends linearly and the direction in which the other receiving part 26 extends linearly are not parallel, and the opposing receiving parts 16 and 26 are arranged oppositely so as to partially overlap each other. That is, in the receiving parts 16 and 26 configured to be non-parallel, the portion of one of the receiving parts 16 and 26 that does not overlap each other serves as an adjusting margin to allow for a misalignment if such a misalignment of stacking occurs during stacking. For example, regarding the linearly extending direction of the opposing receiving parts 16 and 26, the other linearly extending direction is preferably inclined by 5° to 90° and more preferably inclined by 10° to 90°, with respect to the one linearly extending direction. In particular, when the inclination angle of the opposing receiving parts 16 and 26 in the linearly extending direction is set to 10° to 90°, the length of the receiving parts 16 and 26 can be further shortened, and setting the range of the receiving parts 16 and 26 to be smaller contributes to downsizing of the stacked structure body 100 of the fuel cell separator. However, in the opposing receiving parts 16 and 26 configured to be non-parallel, as long as the adjusting margin to allow for a misalignment if such a misalignment of stacking occurs can be sufficiently secured, the inclination angle (that is, the intersecting angle of the linearly extending directions) may be smaller than the above-described angle range. Examples of the factors of the misalignment of stacking between the separators in the stacked structure body 100 of the fuel cell separator include a combined factor of the dimensional variation of the separator and the positional deviation of the bonding of the separator.

Further, in the case where each of the receiving parts 16 and 26 is provided so as to be close to the bead parts 14 and 24 of the respective separators 12 and 22, it is preferable that the linearly extending direction of each of the receiving parts 16 and 26 is parallel or inclined to 45° or less with respect to the extending direction of the bead lines of the bead parts 14 and 24.

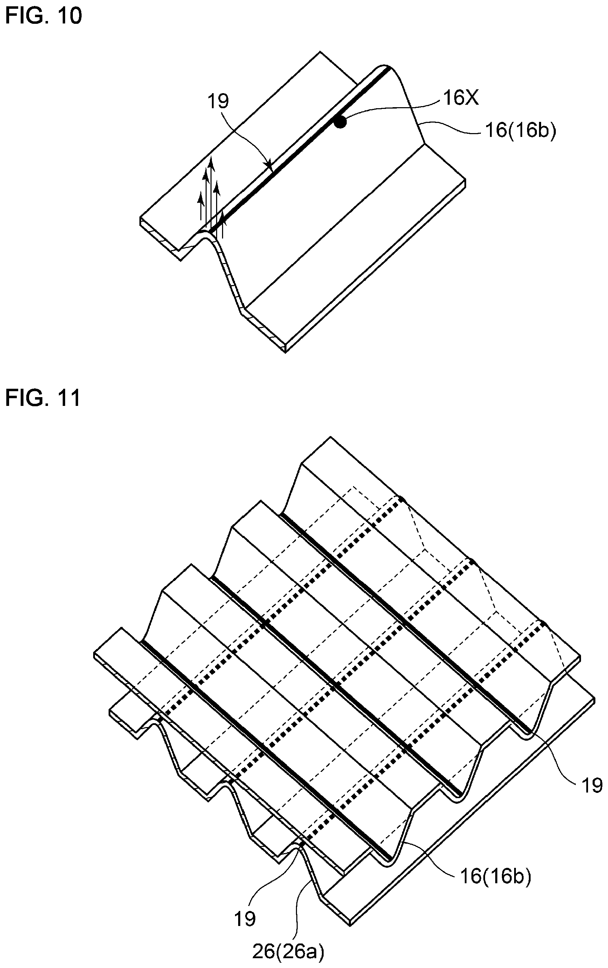

The cross-sectional shape and top surface shape of the receiving parts 16 and 26 are not particularly limited, and any shape may be used as long as it can receive an over-compression load of the bead parts 14 and 24. For example, the receiving parts 16 and 26 may have a top surface 16X that is curved, as in the receiving part 16 (second receiving part 16b) shown in FIG. 10, for example. In the receiving part 16 having such a configuration, the center of the top surface 16X serves as the high reaction force portion 19. Then, a reaction force is generated in the direction indicated by the arrow in FIG. 10. In FIG. 10, the magnitude of the generated reaction force is schematically represented by the size of the arrow. For example, FIG. 11 shows an exemplary case where the receiving parts 16 and 26 having a top surface 16X that is curved as described above are arranged to face each other. By arranging the receiving parts 16 and 26 so as to face each other as shown in FIG. 11, even if a misalignment occurs at the time of stacking respective sets having the respective separators (also simply referred to as "when stacking separators"), the high reaction force portions 19 of the respective sets are in good contact with each other, and it is possible to effectively prevent over-compression of the bead parts (not shown). FIG. 10 is an enlarged perspective view for explaining an exemplary receiving part of the separator, and FIG. 11 is a perspective view for explaining the generation state of a reaction force received by the receiving part shown in FIG. 10.

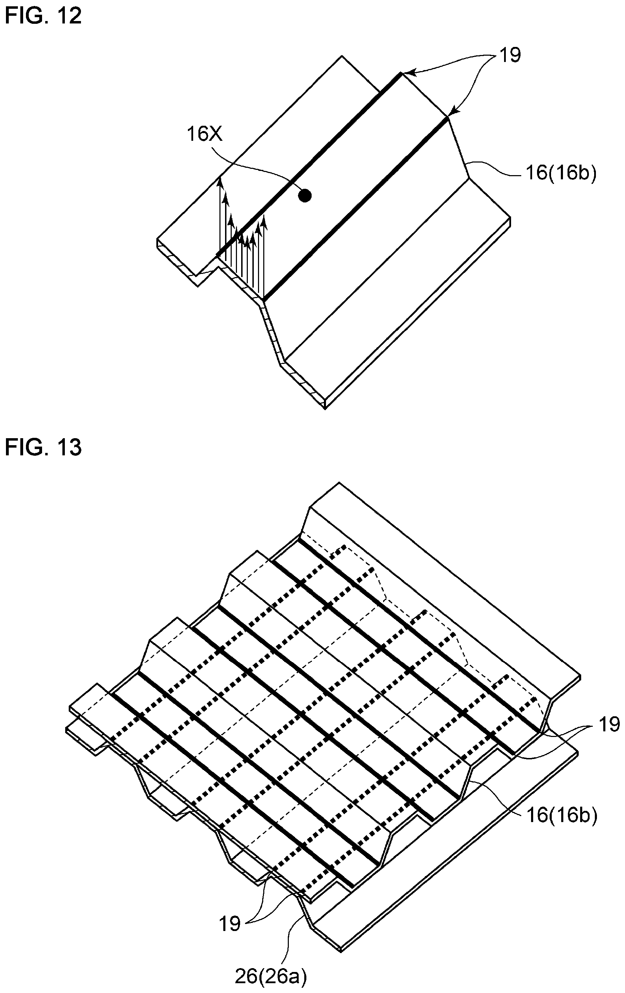

Further, for example, the top surface 16X may be flat like the receiving part 16 (second receiving part 16b) shown in FIG. 12. In the receiving part 16 having such a shape, both end sides of the top surface 16X serve as the high reaction force portion 19. Then, a reaction force is generated in the direction indicated by the arrow in FIG. 12. In FIG. 12, the magnitude of the generated reaction force is schematically represented by the size of the arrow. For example, FIG. 13 shows an exemplary case where the receiving parts 16 and 26 having a top surface 16X that is flat as described above are arranged to face each other. By arranging the receiving parts 16 and 26 so as to face each other as shown in FIG. 13, even if a misalignment occurs when stacking separators, the high reaction force portions 19 are in good contact with each other, and it is possible to effectively prevent over-compression of the bead parts (not shown). FIG. 12 is an enlarged perspective view for explaining another exemplary receiving part of the separator, and FIG. 13 is a perspective view for explaining the generation state of a reaction force received by the receiving part shown in FIG. 12.

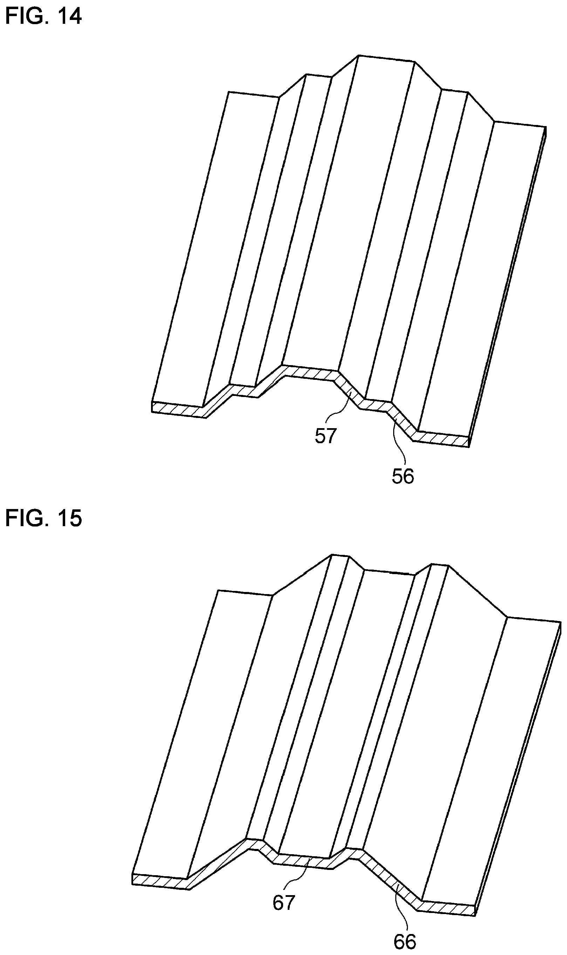

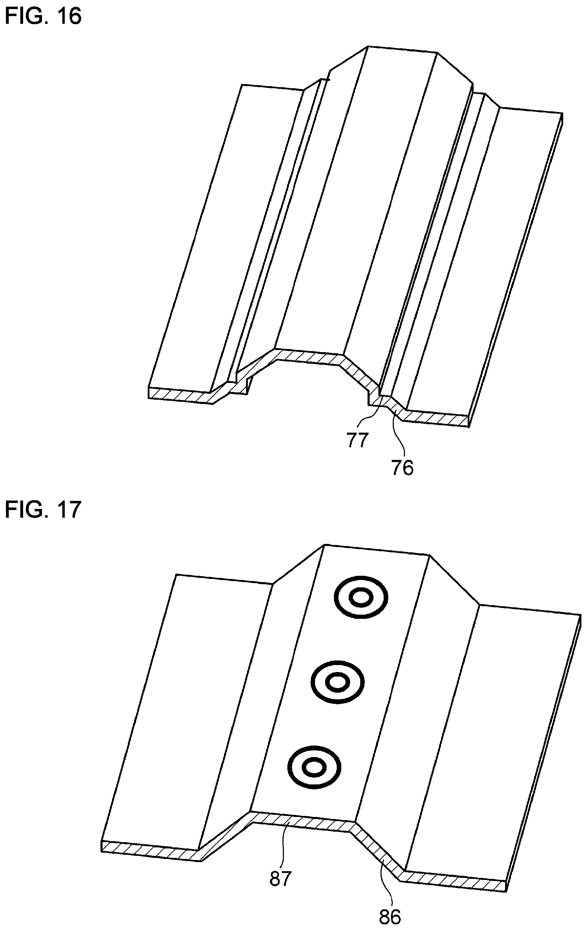

Each of the receiving parts 16 and 26 may have, for example, a shape as shown in FIGs. 14 to 17. For example, the receiving part 56 shown in FIG. 14 has a cross-sectional shape protruding in two stages. That is, the receiving part 56 has a second protrusion 57 on the protruding top surface side. The receiving part 66 shown in FIG. 15 has a groove 67 recessed inward on the top surface side. The receiving part 76 shown in FIG. 16 has a side groove 77 recessed inward in an inclined surface part protruding toward the top surface side. The receiving part 86 shown in FIG. 17 has a recess 87 (dimple) recessed inward on the top surface side. As described above, the receiving parts 16 and 26 may be provided not only with a simple protrusion protruding in one direction but also with a recessed groove, a recess, or the like as appropriate with respect to an inclined surface part serving as a top surface or a side surface of the protrusion.

There is no particular limitation on the manufacturing method of the stacked structure body of the fuel cell separator. For example, a method of forming a bead part and a receiving part by pressing a flat plate made of metal can be exemplified.

### Industrial Applicability

The stacked structure body of the fuel cell separator of the present invention can be used as a fuel cell separator used in an in-vehicle fuel cell stack used in vehicles and the like.

### Reference Signs List

10, 30: unit cell
11, 31: first set
12, 32: separator
12a, 32a: first separator
12b, 32b: second separator
12O, 32O: first contact surface
12P, 32P: first outer surface
12Q, 32Q: second outer surface
14, 34: bead part
14a, 34a: first bead part
14b, 34b: second bead part
16, 36: receiving part
16a, 36a: first receiving part
16b, 36b: second receiving part
16X: top surface (top surface of the receiving part)
18: communication hole
19: high reaction force portion
20, 40: unit cell
21, 41: second set
22, 42: separator
22a, 42a: third separator
22b, 42b: fourth separator
22O, 42O: second contact surface
22P, 42P: third outer surface
22Q, 42Q: fourth outer surface
24, 44: bead part
24a, 44a: third bead part
24b, 44b: fourth bead part
16, 36: receiving part
26a,46a: third receiving part
26b, 46b: fourth receiving part
50: gas flow path
51: membrane electrode assembly
52: electrolyte membrane
53: electrolyte catalyst layer
54: seal material
56, 66, 76, 86: receiving part
57: second protrusion
58: gas diffusion layer
67: groove
77: side groove
87: recess (dimple)
100: stacked structure body of fuel cell separator
200: stacked structure body of fuel cell separator
300: fuel cell stack

## Claims

1. A stacked structure body of a fuel cell separator in which two or more fuel cell separators constituting a unit cell of a fuel cell stack are stacked, comprising:
a first set having one separator and a second set having another separator, wherein
said one separator and said another separator have a bead part protruding toward one surface side, and a receiving part protruding linearly in the same direction as the bead part to receive an over-compression load of the bead part, respectively,
said one separator and said another separator are oppositely arranged such that the surfaces on the protruding sides of the bead part and the receiving part face each other,
a direction in which the receiving part of said one separator extends linearly and a direction in which the receiving part of said another separator extends linearly are configured to be non-parallel, and the opposing receiving parts are configured to partially overlap each other.

2. The stacked structure body of a fuel cell separator according to claim 1, comprising:
the first set comprising a first separator and a second separator which are stacked in the thickness direction, and
the second set comprising a third separator and a fourth separator which are stacked in the thickness direction, wherein,
the second separator includes: a second bead part protruding toward a second outer surface side opposite to a first contact surface on which the first separator and the second separator which are stacked are brought into contact with each other; and a second receiving part protruding linearly in the same direction as the second bead part to receive an over-compression load of the second bead part,
the third separator includes: a third bead part protruding toward a third outer surface side opposite to a second contact surface on which the third separator and the fourth separator which are stacked are brought into contact with each other; and a third receiving part protruding linearly in the same direction as the third bead part to receive an over-compression load of the third bead part,
the first set and the second set are stacked such that the second outer surface side of the second separator constituting the first set and the third outer surface side of the third separator constituting the second set face each other,
a direction in which the second receiving part of the second separator extends linearly and a direction in which the third receiving part of the third separator extends linearly are configured to be non-parallel, and the second receiving part and the third receiving part are arranged oppositely so as to partially overlap each other.

3. The stacked structure body of a fuel cell separator according to claim 2, wherein the first separator has a first bead part protruding toward a first outer surface side opposite to the first contact surface, and a first receiving part protruding linearly in the same direction as the first bead part to receive an over-compression load of the first bead part, and
a direction in which the first receiving part of the first separator extends linearly and a direction in which the second receiving part of the second separator extends linearly are configured to be parallel to each other.

4. The stacked structure body of a fuel cell separator according to claim 3, wherein the first receiving part and the second receiving part are formed in mirror-image symmetry with respect to the first contact surface.

5. The stacked structure body of a fuel cell separator according to claim 2, wherein the fourth separator has a fourth bead part protruding toward a fourth outer surface side opposite to the second contact surface, and a fourth receiving part protruding linearly in the same direction as the fourth bead part to receive an over-compression load of the fourth bead part, and
a direction in which the third receiving part of the third separator extends linearly and a direction in which the fourth receiving part of the fourth separator extends linearly are configured to be parallel to each other.

6. The stacked structure body of a fuel cell separator according to claim 5, wherein the third receiving part and the fourth receiving part are formed in mirror-image symmetry with respect to the second contact surface.

7. The stacked structure body of a fuel cell separator according to claim 2, wherein the first separator has a first bead part protruding toward a first outer surface side opposite to the first contact surface, and a first receiving part protruding linearly in the same direction as the first bead part to receive an over-compression load of the first bead part, and
a direction in which the first receiving part of the first separator extends linearly and a direction in which the second receiving part of the second separator extends linearly are configured to be non-parallel.

8. The stacked structure body of a fuel cell separator according to claim 7, wherein a direction in which the first receiving part of the first separator extends linearly and a direction in which the third receiving part of the third separator extends linearly are configured to be parallel to each other.

9. The stacked structure body of a fuel cell separator according to claim 2, wherein the fourth separator has a fourth bead part protruding toward a fourth outer surface side opposite to the second contact surface, and a fourth receiving part protruding linearly in the same direction as the fourth bead part to receive an over-compression load of the fourth bead part, and
a direction in which the third receiving part of the third separator extends linearly and a direction in which the fourth receiving part of the fourth separator extends linearly are configured to be non-parallel.

10. The stacked structure body of a fuel cell separator according to claim 9, wherein a direction in which the second receiving part of the second separator extends linearly and a direction in which the fourth receiving part of the fourth separator extends linearly are configured to be parallel to each other.

11. The stacked structure body of a fuel cell separator according to any one of claims 1 to 10, wherein two linearly extending directions of the receiving parts facing each other are configured to form an angle of 5 to 90°.

12. The stacked structure body of a fuel cell separator according to any one of claims 1 to 10, wherein in said one separator of the first set and/or said another separator of the second set, a protruding height of the receiving part is smaller than a protruding height of the bead part.
